# EUROPEAN PATENT SPECIFICATION

(11) **EP 1 186 822 B1**
(45) Date of publication and mention of the grant of the patent: **02.07.2003**
(21) Application number: 00830610.2
(22) Date of filing: 07.09.2000
(51) Int. Cl.: F16L 37/12

(54) **Quick-connect coupling**
Schnellkupplung
Accouplement rapide

(43) Date of publication of application: 13.03.2002
(73) Proprietor: Multinu, Gabriella, 23900 Lecco (IT)
(72) Inventor: Multinu, Gabriella, 23900 Lecco (IT)
(74) Representative: Negrini, Elena

(56) References cited:
- EP-A- 0 202 592
- DE-U- 29 500 808
- DE-U- 29 711 842

## Description

### FIELD OF THE INVENTION

The invention relates to a quick action coupling. In particular, this invention relates to a quick-action coupling for manual use, though it may even be commanded by an automatically driven actuator, having clamping jaws shaped in a way to match the shape of the terminal fitting of the pipe or hose to be coupled that retain the terminal fitting in a leak proof manner.

### BACKGROUND OF THE INVENTION

In many industrial sectors such as in laboratories and workshops, it is often necessary to connect pipes and/or hoses for ducting pressurized of fluids, either gaseous or liquid, in order to rapidly carry out tests, build up a certain hydraulic or pneumatic circuit or power a fluid driven machine.

For obvious productivity reasons, it is important the use of quick-action couplings for quickly join pipes and/or hoses, either manually operated or acted upon by dedicated pneumatic actuators. Normally, such quick-action couplings are specifically designed for the type of terminal fittings of the pipes or of the hoses to be connected.

Depending on the shape and size of the end fitting of the hose or pipe to be connected, two or more jaws of the coupling expand allowing the end fitting of the hose or pipe to be inserted until forcing it against an elastic gasket. Upon release of jaws they close tightly around the fitting under the action of a spring and retain it in the sealing position inside the coupling.

There are many quick-action couplings on the market with different characteristics for various applications.

The document WO 97/32154 discloses a quick-action coupling suitable for threaded or differently shaped end nipples of a pipe or of a hose. A plurality of clamping jaws, and of spacer jaws, are alternately disposed in a star or corolla arrangement. An expanding mandrel is thrust by the end nipple of the hose or pipe being inserted through the mouth of the coupling and it expands a shank portion of the pivotally held jaws thus allowing the nipple to be fully pushed inside the coupling against the elastic gasket.

The document DE 295 00 808 U discloses a quick-action coupling suitable for a threaded end nipple of a pipe or hose, employing a plurality of clamping jaws disposed in a star or corolla arrangement, the pivotal opening of which is allowed by pulling backward the spring loaded outer sleeve when inserting the nipple fully inside the coupling. The release of the outer sleeve forces the pivotally opened corolla jaws to contract for gripping and blocking the threaded nipple.

These types of quick-action couplings are relatively complex and expensive because of the large number of parts that compose them.

Moreover, a drawback of these quick-action couplings is that the insertion of the end fitting of hose occurs with the jaws wide open. Specially in the case of threaded nipples (or even in the case of flanges nipples), upon releasing the jaws, the crests of the threaded portions present in the inner clamping surface of the jaws may fall on the crests of the thread of the nipple, momentarily failing the grip and causing a release of the pressured fluid.

### OBJECT AND SUMMARY OF THE INVENTION

These drawbacks of known quick-action couplings are effectively overcome with the present invention whose object is an improved quick-action coupling according to claim 1 that is composed of a relatively limited number of parts making it substantially less expensive.

According to this invention, the coupling mechanism is such that upon release of the jaws a correct match of the cooperating surfaces of the inner faces of the jaws and of the nipple is always assured because, during the insertion of the nipple, the cooperating surfaces are maintained in contact with each other by allowing for a reciprocal surmounting of the crests of threads or of similar features in opposition to a relatively small elastic force sufficient to maintain the cooperating surfaces in contact with each other while the pipe or hose end fitting is pushed inside the coupling until reaching a sealing abutment position against the elastic gasket of the coupling.

In this way, when the jaws are released, a correct engagement of the threads or functionally similar features of the end nipple and of the jaws occurs in a "pre-established" fashion which, in practice eliminates false, improper and momentarily unstable connections.

The quick-action coupling of the invention is generally composed of a tubular body defining a coupling mouth at one end and equipped at the other end with means for sealably connecting to a conduit or pipe, and at least a set of clamping jaws located between the two ends of the coupling, of a shape adapted to grasp and retain a certain terminal fitting of a pipe or of a hose to be connected.

According to a first aspect of the coupling of the invention, the tubular body has at least two identical notchings on a same plane perpendicular to the axis of the tubular body, defining at least two circumferential windows having the same angular extension and functionally opposed to each other or similarly functionally disposed around the circumference of the cylindrical wall of the tubular body, relatively near the mouth of the coupling.

Each jaw has the shaped of a sector of a circular crown the angular extension of which matches that of a relative window through which it may radially slide inward and outward.

The outer circular surface of each jaw is conical with the cone opening towards the coupling mouth whereas the inner circular surface has a shape specifically adapted to functionally match the shape of the terminal fitting of the pipe or hose to be connected.

One of the flat radial surfaces of the jaws has a circular groove within which is mounted a restraining circular spring.

A spring contrasted axially slideable seat inside the tubular body, against which the end surface of the hose or pipe fitting bears has a gasket of a relatively soft elastomer onto which the end surface of the fitting abuts, upon connecting the pipe or hose to the coupling.

An external sleeve has a conical end portion that engages and pushes against the conical outer surfaces of the jaws, under the action of a thrust spring.

The external sleeve may be forcibly moved backwards in respect to the mouth of the tubular body in contrast to the force exerted by thrust spring, for allowing the pipe or hose fitting to be pushed through the mouth inside the tubular body while displacing the jaws radially apart from each other in opposition to the moderate elastic force exerted by the restraining circular spring.

When the external sleeve is released, the inner surfaces of the jaws, which are appropriately shaped, tighten on the outer surface of the terminal fitting (nipple) grasping it and restraining any back-off displacement of the nipple that had been forcibly pushed against the seal gasket.

The quick-action coupling of the invention may preferably have an internal check valve of any commonly available suitable type that is opened by the axial displacement of the spring contrasted seat assembly having a pin extension for pushing open the shutter of the check valve. The axial displacement of the pin is caused by the nipple being pressed on the seal gasket that causes a yielding on a compression of the material that contrasts the yielding of the axially displaceable seat assembly.

Of course, the number of windows and the number of radially displaceable jaws may be even greater than two.

The quick-action coupling of the invention is more precisely defined in claim 1 while particularly preferred embodiments are defined in the subordinate claims.

### BRIEF DESCRIPTION OF THE DRAWINGS

**Figures 1a, 1b and 1c** show respectively a longitudinal section, a tridimensional sectional view and an exploded view of the various parts of a quick-action coupling of the invention, intended to receive threaded nipples.

**Figure 2a, 2b and 2c** show respectively a longitudinal partial cross section, a tridimensional section view and a exploded view of the various parts of quick-action coupling of the invention, intended to receive flanged fittings.

### DESCRIPTION OF SEVERAL EMBODIMENTS OF THE INVENTION

In the figures, the same parts or parts that have the same function are identified with the same number.

According to the embodiment shown in the figures, the quick-action coupling is equipped also with an internal check valve that is automatically opened upon inserting the terminal of a pipe or hose to be connected inside the coupling. This optional check valve is particularly useful if the pipe or hose is to be connected to a conduit of fluid under pressure that may be released in the atmosphere when the hose is disconnected. Of course, the presence of such an internal check valve remains an option although it is recommended.

The quick-action coupling of the invention is composed of a tubular body 4, defining a coupling mouth 4a.

The other end of the tubular body may be threaded and is generally connected to a pipe fitting 1 of a conduit, pipe or manifold.

According to the preferred embodiment shown in the figures, the quick-action incorporates a check valve 2 composed of a shutter 2a, forced by the fluid pressure and/or by a spring 15 against a seat of a check valve body 2b housed inside the pipe fitting 1. Customarily the check valve body has a sealing O-ring 2c and is held in place by a Seeger ring 3 installed in the groove 2d, according to standard assembling techniques.

The check valve 2 may be a standard one-way valve and depending on the type of application (fluid, temperature, etc.) it may even be of plastic, with the exception of the spring 15 and the O-ring 2c. In practice, the valve 2 may be installed or removed from the quick-action coupling device, depending on needs.

The tubular body 4 has at least two identical notchings 4b produced on a same plane perpendicular to the axis of the tubular body. The notchings 4b define at least two distinct windows, of the same angular extension, functionally opposed in the case of two or four notchings or differently disposed in the case of an odd number of notchings, for example 3, near the mouth 4a of the tubular body.

Through each window 4b, a jaw 13 is free to move radially inward and outward.

Substantially, the jaw is shaped like a sector of a circular crown, the angular extension of which is commensurate to the aperture of the window through which it is installed such to be radially slideable through it.

The outer circular surface 13a of each jaw is conical whereas its inner surface 13b has a profile shaped in a way such to functionally engage with the profile of the pipe terminal fitting (nipple) to be coupled.

One of the two flat surfaces of the jaws 13, preferably the one facing toward the mouth of the coupling, has a circular groove 13c (that extends for the whole arc of circumference of the jaw) into which a circular restraining spring 12 is installed for biasing forcing the jaws toward each other that is in a contracted position.

Preferably, such a circular spring may be a helicolidal spring of a thin wire forming an elastic compression ring capable of conforming itself around the tubular body while engaging the jaws 13.

At the bottom of the housing into which the terminal nipple of the pipe or hose to be connected fits there is a gasket 11 of an elastomer material against which the end surface of the nipple is pushed in a sealing abutment. An internal cylindrical body 10 axially slideable within the tubular body 4 in opposition to the force of a contrasting spring 8 supports the gasket.

This forcibly displaceable internal body 10 has an O-ring 14 that provides for a primary seal between the slideable internal body 10 and the tubular body 4 of the coupling and is contrasted by an internal spring 8 which, when the terminal nipple of the hose is forcibly thrust against the gasket 11, is compressed by the internal body 10.

An external sleeve 7 has a conical surface 7a at its end that normally bears on the outer conical surface 13a of the jaws 13, being forced by the spring 6 towards the mouth 4a of the coupling.

The pulling backwards of the outer sleeve 7 in respect to the mouth 4a, in contrast to the force exerted by the thrust spring 6, allows the insertion of the end nipple of the pipe or hose to be connected and to push it inside the tubular body 4 while radially forcing the jaws 13 apart in opposition to the contrasting elastic force exerted by the biasing circular spring 12.

Therefore, during insertion, the crests of the respective shaped profiles of the terminal fitting of the pipe or hose and of the inner cylindrical surfaces of the jaws may easily surmount each other by virtue of the relatively modest biasing force of the restraining circular spring 12, while substantially remaining in mutual contact with each other.

The terminal fitting of the pipe is eventually thrust against the gasket 11, in opposition to the force exerted by the internal spring 8, as far as a leakless seal is established.

By releasing the sleeve 7, the jaws tighten over the terminal fitting of the pipe thus establishing a solid grip and preventing any undesirable backing off from the sealing position assumed against the gasket 11 in contrast with the force exerted by the internal spring 8.

As already said, the jaws 13 have their inner faces shaped to engage with the particular shape of the fitting of the pipe or hose to be solidly and stably held in position.

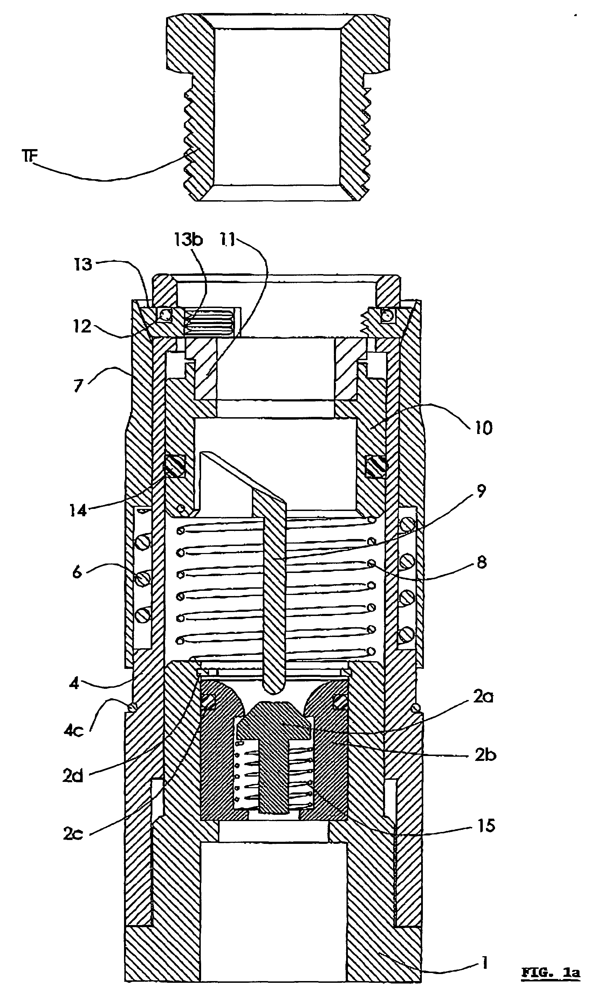

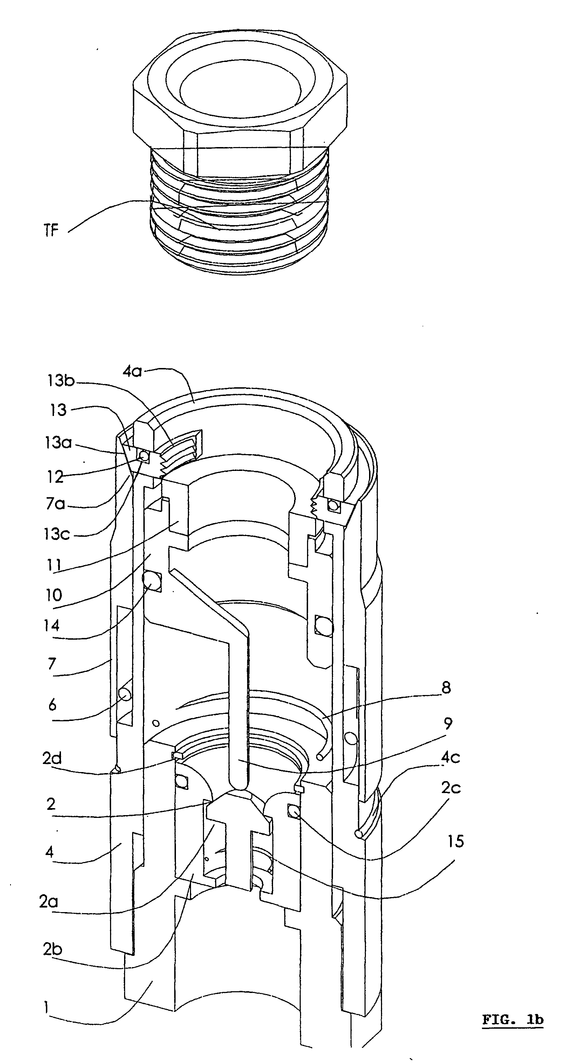

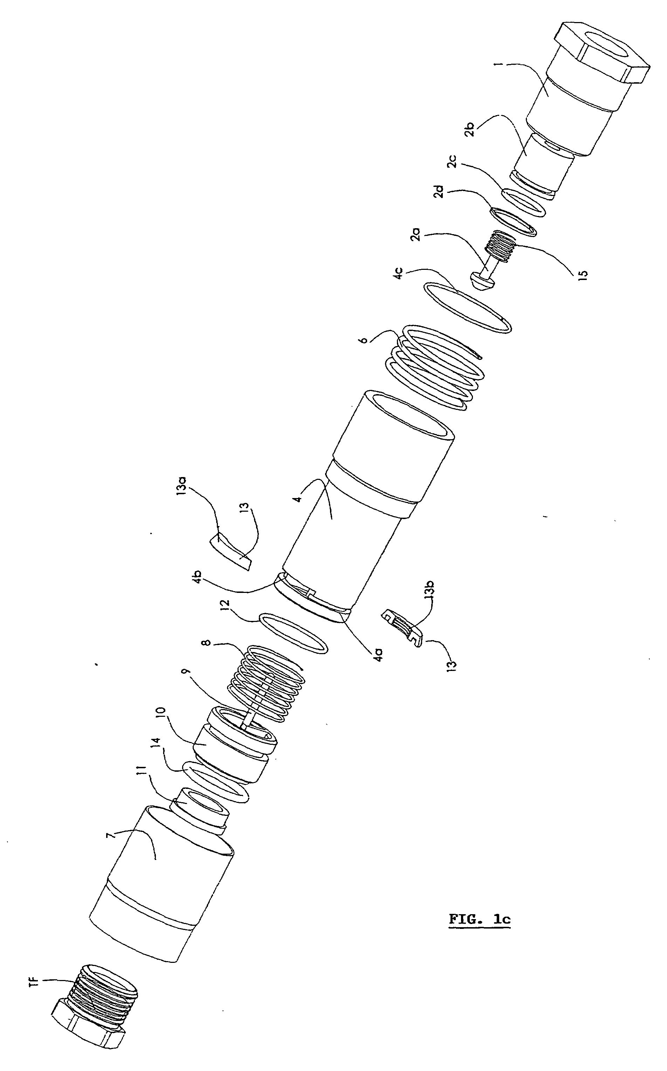

Figure 1a, 1b and 1c illustrate a quick-action coupling of the invention to be used with threaded terminal nipples TF.

As shown in Figures 1a, 1b and 1c the inner 13b of the jaws (two in this example) are similarly threaded for tightening on and holding the threaded nipple TF inserted into the coupling.

During insertion, the respective threads of the nipple TF and those of the jaws mutually surmount each other in opposition to the biasing force exerted by the restraining circular spring 12 of the jaws.

This moderate biasing force substantially maintains in contact with each other the threads of the nipple and of the inner surfaces of the jaws 13.

Therefore, having pushed the terminal nipple TF of the pipe or hose into the coupling as far as establishing a leakless seal against the gasket 11, generally made of relatively soft rubber or equivalent elastomer, when the sleeve 7 is released, the respective threads of the internal surfaces 13b of the jaws 13 are already adherent to the threads of the nipple which is thereby securely gripped and retained in the reached position, without any backward displacement.

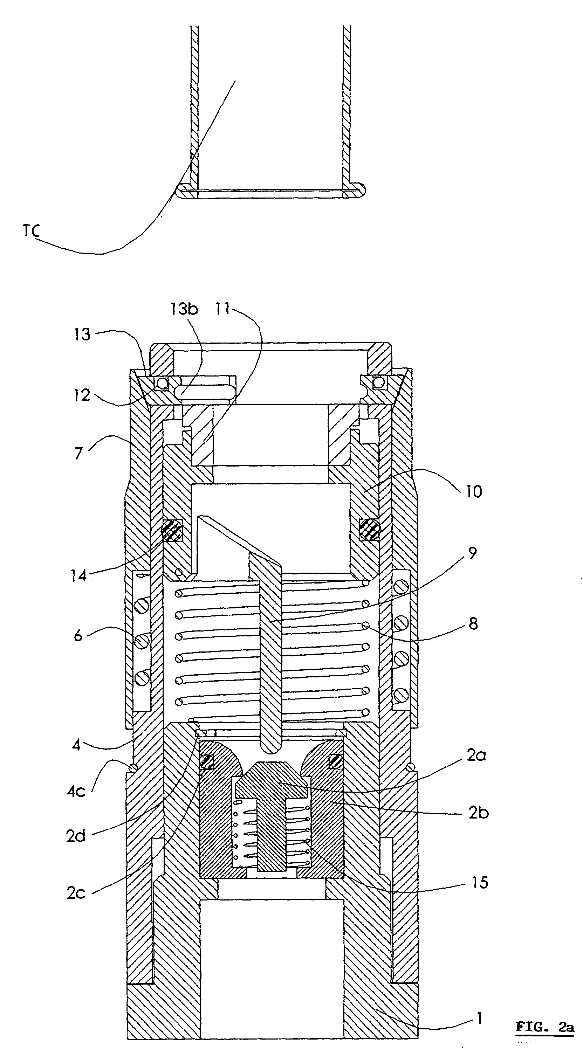

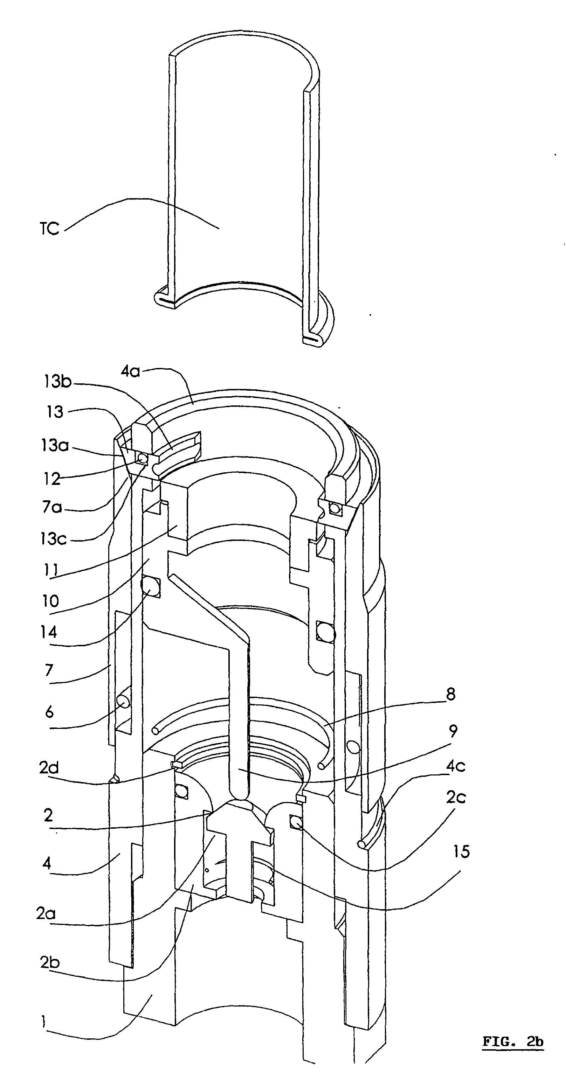

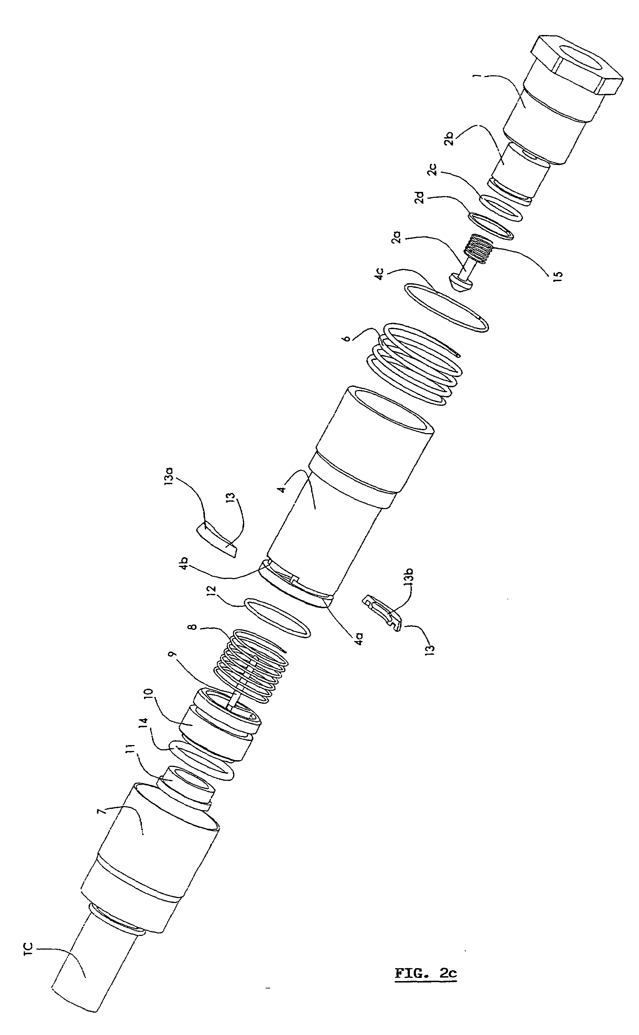

Even if case of a different shape of the end fitting TC of the pipe or hose to be connected, as shown in the example of figure 2a, 2b and 2c, the same effective gripping and retaining characteristics are ensured because once the seal position is established, the circular groove on the inner surfaces of the jaws 13 is already engaged with the collet or end flange TC of the terminal fitting of the pipe or hose by virtue because of the action of the elastic biasing force exerted by the restraining spring 12 of the jaws.

When inside the quick-action coupling there is a check valve 2, according to the preferred embodiments illustrated in the figures, the pushing of the end of the nipple against the rubber gasket 11 forcibly displaces the supporting internal body 10 compressing the internal spring 8, and causes the pin extension 9 to push open the shutter 2a of the check valve 2, in opposition to the eventually present contrasting spring 15.

The internal check valve 2 will remain open as long as the terminal nipple of the pipe or hose remains connected and will automatically close when disconnecting it from quick-action coupling.

Disconnection is done by forcing backward the external sleeve 7, thus releasing the grasps exerted by the jaws and allowing the extraction of the terminal nipple (TF, TC), which also in this case occurs in opposition to the modest elastic biasing force exerted by the restraining circular spring 12 of the jaws.

As shown in the figures, the backwards movement of the sleeve 7 is limited by an elastic ring 4c, installed in a dedicated throat of the tubular body 4.

This limitation of the movement of the sleeve 7 ensures that, at the end of the run, the conical end of the sleeve 7 is still remains in a position appropriate to prevent the jaws 13 from being accidentally pushed completely out of the respective windows.

By simply removing the elastic ring 4c that limits the backward movement of the sleeve 7, and by pushing fully backward the sleeve 7, the coupling of the invention may be readily disassembled. The jaws 13 may be pushed further out of their windows and thus removed from their housing windows, by lifting off the restraining circular spring 12.

Once the jaws 13 have been removed the whole coupling may be completely disassembled.

This simple operation of removal of the jaws 13 also serves to replace or substitute the jaws without completely disassembling the whole device.

Therefore, apart from the ultimate limitation of the mouth 4a of the tubular body 4, it is possible, with a simple operation, to substitute the jaws 13, to adapt their inner profile to the profile of the terminal nipple to be inserted.

This may be carried out to adapt the quick-action coupling to receive threaded nipples of different diameter and/or of different threading or any other type of nipple.

The material used to construct the different parts that compose the quick-action coupling of the invention, with the exception of course of the elastic gasket 11, the O-rings 2c and 14 and the springs 6, 8 and 15, may be different depending on the particular application, the nature of the fluid, etc..

Steel, titanium, bronze, brass, hastelloy, plastic materials are amongst the most common construction materials that can be used.

The terminal nipple or end fitting of the pipe or hose to be coupled may have other shapes than those depicted by way of examples in the figures, such as flat flanges, countersunks, beaded ends, or even hose fittings.

In any case, the radially acting jaws 13 of the coupling of the invention will have an inner surface shaped to functionally cooperate with the specific shape of the terminal nipple of the pipe or hose.

Of course, the quick-action couplings of the invention may be designed for different ranges of fluid pressures such to satisfy specific requirements and applications. Normally, they may be used for pressures ranging from 0 to 1000 bar and even higher, most commonly they are designed from pressures comprised between 0 and 200 bar.

## Claims

1. A quick-action coupling for gripping and retaining a hose or pipe end fitting terminating with a flange or with a threaded nipple, (TF, TC) after having being inserted a leakless sealing position inside the coupling, said coupling comprising a tubular body (4) defining a coupling mouth (4a) at the end close to the hose or pipe end fitting and having means for connecting to a conduit at the other end, a gasket (11) made of an elastomer material against which an end surface of said terminal fitting (TF, TC) sealingly bears, an internal body (10) supporting said gasket (11) axially displaceable inward of said tubular body (4) in opposition to a contrasting spring (8) when said end fitting (TF, TC) is pushed against said elastically supported gasket (11), at least a set of jaws (13) for gripping and retaining said end fitting (TF, TC) and an external sleeve (7) thrusted by a spring (6) towards the mouth (4a) for closing said jaws (13), **characterized in that**
said tubular body (4) has at least two notchings (4b) on a same plane perpendicular to the axis of the tubular body (4) defining at least two windows of similar angular extension through the cylindrical wall of the tubular body (4), near said mouth (4a);
each of said jaws (13) is shaped like a sector of a circular crown of angular extension commensurated to that of said windows in order to radially move inwardly and outwardly through a respective window, its inner surface (13b) being specifically shaped to functionally engage with either said terminal flange or with said threaded nipple (TF, TC) of the end fitting of the pipe or hose to be connected, its outer surface (13a) being conical, the cone opening towards said coupling mouth (10) and a radial flat surface having a circular groove (13c);
a biasing circular spring (12) fitting in the circular groove (13c) of said jaws (13) for keeping closed said radially displaceable jaws;
said external sleeve (7) having a conical end surface (7a) opening towards said mouth (4a) bearing on the outer conical surfaces (13a) of said jaws (13) for gripping and retaining said end fitting (TF, TC);
the pulling backwards of the external sleeve (7) in respect to the mouth (4a), in opposition to said thrust spring (6) allowing said end fitting (TF, TC) to be pushed through the mouth (4a) inside the tubular body (4) shifting apart the radially displaceable jaws (13) in opposition to the biasing elastic force exerted by said circular spring (12) and a release of the external sleeve (7) forcing the jaws (13) to tighten around the flange or thread of the end fitting (TF, TC) in a leakless sealing abutment against said elastically supported gasket (11).

2. The quick-action coupling according to claim 1, **characterized in that** it includes an internal check valve (2) that is opened by the axial inward displacement of said internal body (10) having a pin extension (9) that pushes open a shutter (2a) of the check valve.

3. The quick-action coupling according to claim 1, **characterized in that** said windows (4b) and said jaws (13) are in a number greater than 2.

## Patentansprüche

1. Schnellverschlußkupplung für das Greifen und Festhalten eines Schlauch- oder Rohrendstückes, das mit einem Flansch oder mit einem Gewindenippel (TF, TC) verschlossen wird, nachdem es in eine gasdichte Verbindungsposition innerhalb der Kupplung eingesetzt worden ist, wobei die besagte Kupplung einen röhrenförmigen Körper (4) aufweist, der eine Kupplungsöffnung (4a) an dem Ende bildet, das in der Nähe des Schlauch- oder Rohrendstückes angeordnet ist und die am anderen Ende Mittel für den Anschluß an ein Leitungsrohr aufweist, eine Dichtung (11) aus einem Elastomermaterial, an der eine Endfläche des besagten Endstückes (TF, TC) dichtend anliegt, einen inneren Körper (10), der die besagte Dichtung (11) derart haltert, daß sie von dem besagten röhrenförmiger Körper (4) in axialer Richtung einwärts gegen eine Druckfeder (8) verschieblich ist, wenn das besagte Endstück (TF, TC) gegen die besagte elastisch gehalterte Dichtung (11) gedrückt wird, mindestens einen Satz Klemmbacken (13) für das Greifen und das Festhalten des besagten Endstückes (TF, TC) und eine externe Hülse (7), die durch eine Feder (6) in Richtung auf die Öffnung (4a) gedrückt wird, um die besagten Klemmbacken (13) zu schließen, **dadurch gekennzeichnet, daß**
der besagte röhrenförmige Körper (4) mindestens zwei Einschnitte (4b) auf einer gleichen Fläche aufweist, die senkrecht zur Achse des röhrenförmigen Körpers (4) verläuft, die wenigstens zwei Fenster gleicher angularer Erstreckung in der zylinderförmigen Wand des röhrenförmigen Körpers (4) in der Nähe der besagten Öffnung (4a) bilden, daß jede der besagten Klemmbacken (13) wie ein Sektor einer kreisförmigen Krone mit einer angularer Erstreckung geformt ist, die jeweils auf eines der besagten Fenster derart abgestimmt ist, daß sie durch ein zugeordnetes Fenster in radialer Richtung nach innen und nach außen zu bewegen ist, wobei ihre innere Oberfläche (13b) spezifisch derart ausgebildet ist, daß sie entweder mit dem besagten Abschlußflansch oder mit dem besagten Schraubnippel (TF, TC) des Endstückes des anzuschließenden Rohres oder Schlauches in funktionalen Eingriff bringbar ist, wobei ihre äußere Oberfläche (13a) konisch ausgebildet ist und wobei sich der Konus in Richtung auf die besagte Kupplungsöffnung (10) erweitert und wobei eine radiale flache Oberfläche eine kreisförmige Nut (13c) aufweist;
eine kreisförmige Druckfeder (12), die in die kreisförmige Nut (13c) der besagten Klemmbacken (13) eingepaßt ist und die die besagten radial verschieblichen Klemmbacken geschlossen hält;
daß die besagte externe Hülse (7) eine konisch ausgebildete Endfläche (7a) aufweist, die sich in Richtung auf die besagte Öffnung (4a) erweitert und die auf den äußeren konischen Oberflächen (13a) der besagten Klemmbacken (13) für das Ergreifen und Festhalten der besagten Endstücke (TF, TC) ausgebildet ist;
daß das Zurückziehen der externen Hülse (7) in bezug auf die Öffnung (4a) entgegen der Kraft der besagten Druckfeder (6) es ermöglicht, daß das besagte Endstück (TF, TC) durch die Öffnung (4a) im röhrenförmigen Körper (4) gedrückt wird und dabei die radial bewegbaren Klemmbacken (13) entgegen der elastische Vorspannung der besagten kreisförmigen Feder (12) auseinander drückt und dadurch eine Freigabe der externen Hülse (7) erfolgt, wodurch die Klemmbacken (13) um den Flansch oder das Gewinde des Endstückes (TF, TC) zu einer gasdicht verschließenden Anlage an der besagten elastisch gehalterten Dichtung (11) gebracht werden.

2. Schnellverschlußkupplung gemäß Anspruch 1, **dadurch gekennzeichnet, daß** sie ein internes Prüfventil (2) aufweist, das durch eine axiale nach innen gerichtete Verschiebung des besagten inneren Körpers (10) geöffnet wird, der eine stiftartige Verlängerung (9) aufweist, die einen Verschluß (2a) des Prüfventils aufdrückt.

3. Schnellverschlußkupplung gemäß Anspruch 1, **dadurch gekennzeichnet, daß** die besagten Fenster (4b) und die besagten Klemmbacken (13) in einer Anzahl größer als 2 vorhanden sind.

## Revendications

1. Couplage à action rapide pour saisir et retenir une garniture d'extrémité de tuyau ou de conduite se terminant par une bride ou un raccord fileté (TF, TC) après l'avoir inséré dans une position de scellage étanche aux fuites à l'intérieur du couplage, ledit couplage comprenant un corps tubulaire (4) définissant une bouche de couplage (4a) à l'extrémité proche de la garniture d'extrémité du tuyau ou de la conduite et ayant des moyens de raccordement avec une conduite à l'autre extrémité, un joint d'étanchéité (11) constitué d'un matériau élastomère contre lequel porte de manière étanche une surface d'extrémité de ladite garniture d'extrémité (TF, TC), un corps interne (10) supportant ledit joint d'étanchéité (11) déplaçable axialement à l'intérieur dudit corps tubulaire (4) en regard d'un ressort opposé (8) lorsque ladite garniture d'extrémité (TF, TC) est poussée contre ledit joint d'étanchéité (11) supporté de manière élastique, au moins un jeu de mors (13) pour saisir et retenir ladite garniture d'extrémité (TF, TC) et un manchon externe (7) poussé par un ressort (6) vers la bouche (4a) pour fermer lesdits mors (13), **caractérisé en ce que** :
ledit corps tubulaire (4) a au moins deux encoches (4b) sur un même plan perpendiculaire à l'axe du corps tubulaire (4) définissant au moins deux fenêtres d'extension angulaire similaire à travers la paroi cylindrique du corps tubulaire (4) près de ladite bouche (4a);
chacun desdits mors (13) est façonné en secteur de couronne circulaire d'extension angulaire correspondant à celle desdites fenêtres pour se déplacer radialement vers l'intérieur et l'extérieur à travers une fenêtre respective, sa surface interne (13b) étant façonnée spécifiquement pour s'engager de manière fonctionnelle sur ladite bride d'extrémité ou sur ledit raccord fileté (TF, TC) de la garniture d'extrémité de la conduite ou du tuyau à raccorder, sa surface externe (13a) étant conique, le cône s'ouvrant vers ladite bouche de couplage (10) et une surface radiale plate ayant une rainure circulaire (13c);
un ressort circulaire de sollicitation (12) s'ajustant dans la rainure circulaire (13c) desdits mors (13) pour maintenir fermés lesdits mors déplaçables radialement;
ledit manchon externe (7) ayant une surface d'extrémité conique (7a) s'ouvrant vers ladite bouche (4a) portant sur les surfaces coniques externes (13a) desdits mors (13) pour saisir et retenir ladite garniture d'extrémité (TF, TC);
la traction en arrière du manchon externe (7) par rapport à la bouche (4a), en opposition audit ressort de sollicitation (6) permettant de pousser ladite garniture d'extrémité (TF, TC) à travers la bouche (4a) à l'intérieur du corps tubulaire (4) séparant les mors déplaçables radialement (13) à l'encontre de la force élastique de sollicitation exercée par ledit ressort circulaire (12) et une libération du manchon externe (7) forçant les mors (13) à se serrer autour de la bride ou du filet de la garniture d'extrémité (TF, TC) en butée de scellage étanche aux fuites contre ledit joint d'étanchéité (11) supporté de manière élastique.

2. Couplage à action rapide selon la revendication 1, **caractérisé en ce qu'**il comprend une soupape de contrôle interne (2) qui est ouverte par le déplacement axial vers l'intérieur dudit corps interne (10) ayant un prolongement de broche (9) qui presse un obturateur (2a) de la soupape de contrôle pour ouvrir celui-ci.

3. Couplage à action rapide selon la revendication 1, **caractérisé en ce que** lesdites fenêtres (4b) et lesdits mors (13) sont en nombre supérieur à 2.
